# EUROPEAN PATENT APPLICATION

(11) **EP 4 852 159 A1**
(43) Date of publication of application: **09.12.2026**
(21) Application number: 26181669.8
(22) Date of filing: 28.05.2026
(51) Int. Cl.: H01M 50/103, H01M 50/124, H01M 50/131, H01M 50/136, H01M 50/176

(54) **POWER STORAGE CELL**

(30) Priority: 05.06.2025 JP 2025093967
(71) Applicant: Prime Planet Energy & Solutions, Inc., Chuo-ku, Tokyo 103-0022 (JP)
(72) Inventor: MA, Rui, Tokyo, 103-0022 (JP); KAWASAKI, Taishi, Tokyo, 103-0022 (JP)
(74) Representative: Kuhnen & Wacker Patent- und Rechtsanwaltsbüro PartG mbB

(57) **Abstract**

An electrode terminal (200) is provided on at least one of a fifth surface (150) and a sixth surface (160) of an outer surface of an exterior container (100). An insulating film (300) is provided on the outer surface of the exterior container (100). The insulating film (300) has a first member (301A). The first member (301A) includes a first portion (310) covering a whole of the first surface (110), a second portion (320) covering a portion of each of a third surface (130) and a fourth surface (140), and a third portion (330) covering a portion of each of the fifth surface (150) and the sixth surface (160). Folding portions are formed between the first portion (310), the second portion (320), and the third portion (330). The third portion (330) includes a portion at which portions of the insulating film (300) are overlapped with each other on each of the fifth surface (150) and the sixth surface (160).

## Description

### CROSS REFERENCE TO RELATED APPLICATIONS

This nonprovisional application is based on Japanese Patent Application No. 2025-093967 filed on June 5, 2025 with the Japan Patent Office, the entire contents of which are hereby incorporated by reference.

### BACKGROUND OF THE INVENTION

### Field of the Invention

The present technology relates to a power storage cell.

### Description of the Background Art

Conventionally, a surface of an exterior container of a power storage cell has been covered with a film having an insulating property. Examples of the conventional power storage cell include those described in Japanese Patent Laying-Open No. 2014-96357, Japanese Patent Laying-Open No. 2003-223872, Japanese Patent Laying-Open No. 2011-181485, and Japanese Patent Laying-Open No. 2012-33419.

### SUMMARY OF THE INVENTION

In the power storage cell, the insulating film covering the exterior container is required to have a simple configuration and a secure insulating property. From this viewpoint, there is still room for improvement in the conventional power storage cell.

It is an object of the present technology to provide a power storage cell in which an insulating film covering an outer surface of an exterior container has a simple configuration and a secure insulating property.

The present technology provides the following power storage cell.
[1] A power storage cell comprising: an exterior container having an outer surface; an insulating film provided on the outer surface of the exterior container; and an electrode terminal provided on the outer surface of the exterior container, wherein the outer surface of the exterior container has a first surface, a second surface, a third surface, a fourth surface, a fifth surface, and a sixth surface, the first surface and the second surface being each substantially orthogonal to a first direction, the first surface and the second surface facing each other, the third surface and the fourth surface being each substantially orthogonal to a second direction substantially orthogonal to the first direction, the third surface and the fourth surface facing each other, the fifth surface and the sixth surface being each substantially orthogonal to a third direction substantially orthogonal to the first direction and the second direction, the fifth surface and the sixth surface facing each other, each of the first surface, the second surface, the third surface, the fourth surface, the fifth surface, and the sixth surface has a substantially rectangular shape, the electrode terminal is provided on at least one of the fifth surface and the sixth surface, each of the first surface and the second surface has a first area, each of the third surface and the fourth surface has a second area, and each of the fifth surface and the sixth surface has a third area, the first area is smaller than the second area and is larger than the third area, the insulating film has a first member including a first portion covering a whole of the first surface, a second portion covering a portion of each of the third surface and the fourth surface, and a third portion covering a portion of each of the fifth surface and the sixth surface, a first folding portion is formed between the first portion and the second portion, a second folding portion is formed between the first portion and the third portion, and a third folding portion is formed between the second portion and the third portion, and the third portion includes a portion at which portions of the insulating film are overlapped with each other on each of the fifth surface and the sixth surface.
[2] The power storage cell according to [1], wherein the insulating film has a second member including a fourth portion covering a whole of the second surface and a fifth portion covering a portion of each of the third surface and the fourth surface, the second member being provided to be separated from the first member, and the fifth portion of the second member is provided to reach the first member.
[3] The power storage cell according to [1], wherein the first member of the insulating film further includes a fourth portion covering a whole of the second surface, and a fifth portion covering a portion of each of the third surface and the fourth surface, and the fifth portion is provided adjacent to the second portion.
[4] The power storage cell according to [1], wherein the insulating film has a second member including a fourth portion covering a whole of the second surface, a fifth portion covering a portion of each of the third surface and the fourth surface, and a sixth portion covering a portion of each of the fifth surface and the sixth surface, the second member being provided to be separated from the first member, a fourth folding portion is formed between the fourth portion and the fifth portion, a fifth folding portion is formed between the fourth portion and the sixth portion, and a sixth folding portion is formed between the fifth portion and the sixth portion, and the sixth portion includes a portion at which portions of the insulating film are overlapped with each other on each of the fifth surface and the sixth surface.
[5] The power storage cell according to [4], wherein the insulating film has a third member and a fourth member, the third member being provided on the third surface between the second portion and the fifth portion, the third member being provided to be separated from the first member and the second member, the fourth member being provided on the fourth surface between the second portion and the fifth portion, the fourth member being provided to be separated from the first member, the second member, and the third member, and the third member and the fourth member are provided to reach the second member from the first member.
[6] The power storage cell according to [1], wherein the insulating film has a second member and a third member, the second member including a fourth portion covering a whole of the second surface, the second member being provided to be separated from the first member, the third member being overlapped with the second member from a side opposite to the exterior container with respect to the second member, and the third member is provided to protrude outward with respect to each of the fifth surface and the sixth surface in the third direction.
[7] The power storage cell according to [6], wherein the third member is provided to reach an edge end of the electrode terminal in the third direction.
[8] The power storage cell according to any one of [1] to [7], wherein the third portion is formed to expose the electrode terminal.
[9] The power storage cell according to any one of [1] to [8], wherein the electrode terminal is provided at a position away from the first surface with respect to the third portion in the first direction.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a perspective view of an exterior container of a power storage cell.
Fig. 2 is a front view of the exterior container of the power storage cell.
Fig. 3 is a perspective view of a power storage cell according to a first embodiment.
Fig. 4 is a development view of a first member in an insulating film of the power storage cell shown in Fig. 3.
Fig. 5 is a development view of a second member in the insulating film of the power storage cell shown in Fig. 4.
Fig. 6 is a perspective view showing a power storage cell according to a second embodiment.
Fig. 7 is a development view of an insulating film of the power storage cell shown in Fig. 6.
Fig. 8 is a perspective view of a power storage cell according to a third embodiment.
Fig. 9A is a development view of a second member in an insulating film according to the third embodiment.
Fig. 9B is a development view of a fourth member in the insulating film according to the third embodiment.
Fig. 9C is a development view of a third member in the insulating film according to the third embodiment.
Fig. 9D is a development view of a first member in the insulating film according to the third embodiment.
Fig. 10 is a side view of a power storage cell according to a comparative example.
Fig. 11 is a partially enlarged view of Fig. 10.
Fig. 12 is a side view of a power storage cell according to an example of the present technology.
Fig. 13 is a partially enlarged view of Fig. 12 (state before the insulating film is folded).
Fig. 14 is a perspective view of a power storage cell according to a fourth embodiment.
Fig. 15 is a cross sectional view of surroundings of a third member in an insulating film of the power storage cell shown in Fig. 14.
Fig. 16 is a diagram for illustrating an insulation distance between an electrode terminal and a conductive component.

### DESCRIPTION OF THE PREFERRED EMBODIMENTS

Hereinafter, embodiments of the present technology will be described. It should be noted that the same or corresponding portions are denoted by the same reference characters, and may not be described repeatedly.

It should be noted that in the embodiments described below, when reference is made to number, amount, and the like, the scope of the present technology is not necessarily limited to the number, amount, and the like unless otherwise stated particularly. Further, in the embodiments described below, each component is not necessarily essential to the present technology unless otherwise stated particularly. Further, the present technology is not limited to one that necessarily exhibits all the functions and effects stated in the present embodiment.

It should be noted that in the present specification, the terms "comprise", "include", and "have" are open-end terms. That is, when a certain configuration is included, a configuration other than the foregoing configuration may or may not be included.

Also, in the present specification, when geometric terms and terms representing positional/directional relations are used, for example, when terms such as "parallel", "orthogonal", "obliquely at 45°", "coaxial", and "along" are used, these terms permit manufacturing errors or slight fluctuations. In the present specification, when terms representing relative positional relations such as "upper side" and "lower side" are used, each of these terms is used to indicate a relative positional relation in one state, and the relative positional relation may be reversed or turned at any angle in accordance with an installation direction of each mechanism (for example, the entire mechanism is reversed upside down).

Moreover, sizes such as width, length, and diameter of each member illustrated in the present specification are not limited to those shown in the figures, and can be appropriately changed. In the present specification, ordinal numbers such as "first" and "second" may be given to respective configurations, but these ordinal numbers do not limit priority, order, or the like unless explicitly defined.

In the present specification, the term "battery" is not limited to a lithium ion battery, and may include other batteries such as a nickel-metal hydride battery and a sodium-ion battery. In the present specification, the term "electrode" may collectively represent a positive electrode and a negative electrode. Further, the term "electrode plate" may collectively represent a positive electrode plate and a negative electrode plate.

In the present specification, the term "power storage cell" is not limited to a battery cell, and may include a capacitor cell.

In the present specification, the "battery cell" can be mounted on vehicles such as a hybrid electric vehicle (HEV), a plug-in hybrid electric vehicle (PHEV), and a battery electric vehicle (BEV). It should be noted that the use of the "battery cell" is not limited to the use in a vehicle.

In the present specification, a direction in which the short side surfaces of an exterior container are arranged side by side is defined as an X direction serving as a third direction, a direction in which the long side surfaces of the exterior container are arranged side by side is defined as a Y direction serving as a second direction, and a direction in which the bottom surface and upper surface of the exterior container are arranged side by side is defined as a Z direction serving as a first direction.

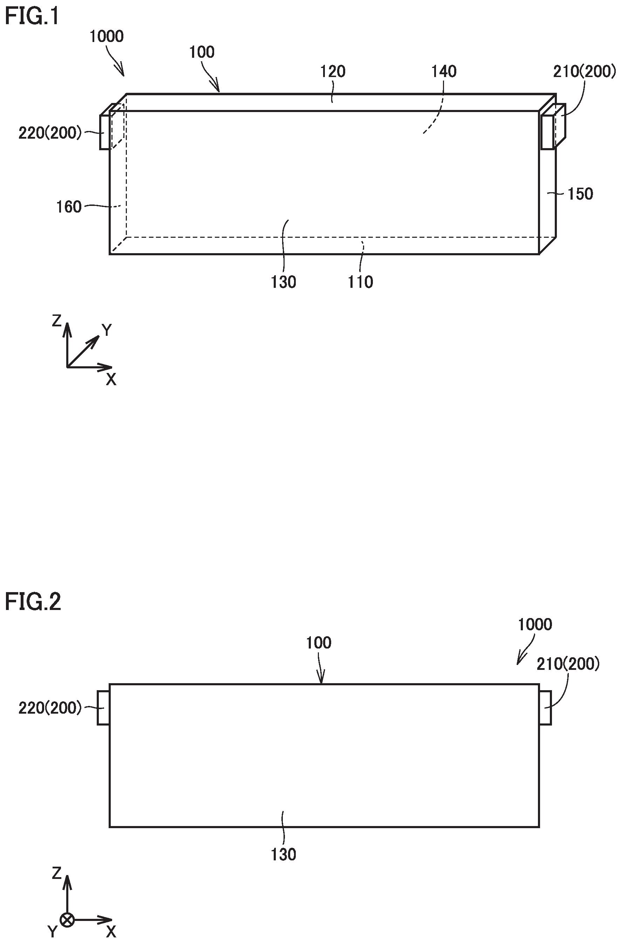

Each of Figs. 1 and 2 shows the exterior container of the power storage cell.

As shown in Figs. 1 and 2, a secondary battery 1000 (power storage cell) includes an exterior container 100 and electrode terminals 200.

When forming a battery assembly including such secondary batteries 1000, the plurality of secondary batteries 1000 are stacked in the Y direction. The plurality of secondary batteries 1000 stacked may be restrained in the stacking direction (Y direction) by a restraint member to form a battery module, or the battery assembly may be directly supported on a side surface of a case of a battery pack without using the restraint member.

Exterior container 100 is composed of a metal. Specifically, exterior container 100 is composed of aluminum, an aluminum alloy, iron, an iron alloy, or the like.

Exterior container 100 has a substantially rectangular parallelepiped shape. The outer surface of exterior container 100 includes a first surface 110, a second surface 120, a third surface 130, a fourth surface 140, a fifth surface 150, and a sixth surface 160.

In the present embodiment, exterior container 100 is formed to be longer in the X direction than in the Y direction and the Z direction. The size of exterior container 100 in the X direction is preferably about 300 mm or more. Thus, relatively large (high-capacity) secondary battery 1000 can be formed. The size of exterior container 100 in the Z direction is preferably about 100 mm or less. Thus, (low-height) secondary battery 1000 having a relatively low height can be formed, thereby improving ease of mounting on a vehicle, for example. However, the sizes of exterior container 100 are not limited to the above ranges.

First surface 110 and second surface 120 each extend in a direction substantially orthogonal to the Z direction (first direction). First surface 110 and second surface 120 face each other.

Third surface 130 and fourth surface 140 each extend in a direction substantially orthogonal to the Y direction (second direction). Third surface 130 and fourth surface 140 face each other.

Fifth surface 150 and sixth surface 160 each extend in a direction substantially orthogonal to the X direction (third direction). Fifth surface 150 and sixth surface 160 face each other.

The Z direction (first direction), the Y direction (second direction), and the X direction (third direction) are substantially orthogonal to one another.

In one example, first surface 110 constitutes the bottom surface when secondary battery 1000 is placed. Second surface 120 is the upper surface when secondary battery 1000 is placed. Each of third surface 130 and fourth surface 140 constitutes the long side surface. Each of fifth surface 150 and sixth surface 160 constitutes the short side surface.

Each of first surface 110, second surface 120, third surface 130, fourth surface 140, fifth surface 150, and sixth surface 160 has a substantially rectangular shape.

First surface 110 is adjacent to third surface 130, fourth surface 140, fifth surface 150, and sixth surface 160 at respective end sides of the substantially rectangular shape. Second surface 120 is adjacent to third surface 130, fourth surface 140, fifth surface 150, and sixth surface 160 at respective end sides of the substantially rectangular shape.

Third surface 130 is adjacent to fifth surface 150 and sixth surface 160 at both ends in the X direction. Fourth surface 140 is adjacent to fifth surface 150 and sixth surface 160 at both ends in the X direction.

The locations at which first surface 110, second surface 120, third surface 130, fourth surface 140, fifth surface 150, and sixth surface 160 each having the substantially rectangular shape are adjacent to one another may be constituted of angular portions or may have round shapes.

When viewed in the Z direction, each of first surface 110 and second surface 120 has a first area (A1). When viewed in the Y direction, each of third surface 130 and fourth surface 140 has a second area (A2). When viewed in the X direction, each of fifth surface 150 and sixth surface 160 has a third area (A3). The area (first area) of each of first surface 110 and second surface 120 is smaller than the area (second area) of each of third surface 130 and fourth surface 140. The area (first area) of each of first surface 110 and second surface 120 is larger than the area (third area) of each of fifth surface 150 and sixth surface 160.

Electrode terminals 200 are provided on the outer surface of exterior container 100. Electrode terminals 200 include a positive electrode terminal 210 and a negative electrode terminal 220. Positive electrode terminal 210 and negative electrode terminal 220 are electrically connected to a positive electrode and a negative electrode of an electrode assembly (not shown) accommodated in exterior container 100, respectively. Positive electrode terminal 210 is provided on fifth surface 150. Negative electrode terminal 220 is provided on sixth surface 160. Electrode terminals 200 may be provided on only one of fifth surface 150 and sixth surface 160.

In the examples of Figs. 1 and 2, each of electrode terminals 200 is provided at a position close to second surface 120 with respect to first surface 110 in the Z direction. However, the position of electrode terminal 200 is appropriately changed.

### (First Embodiment)

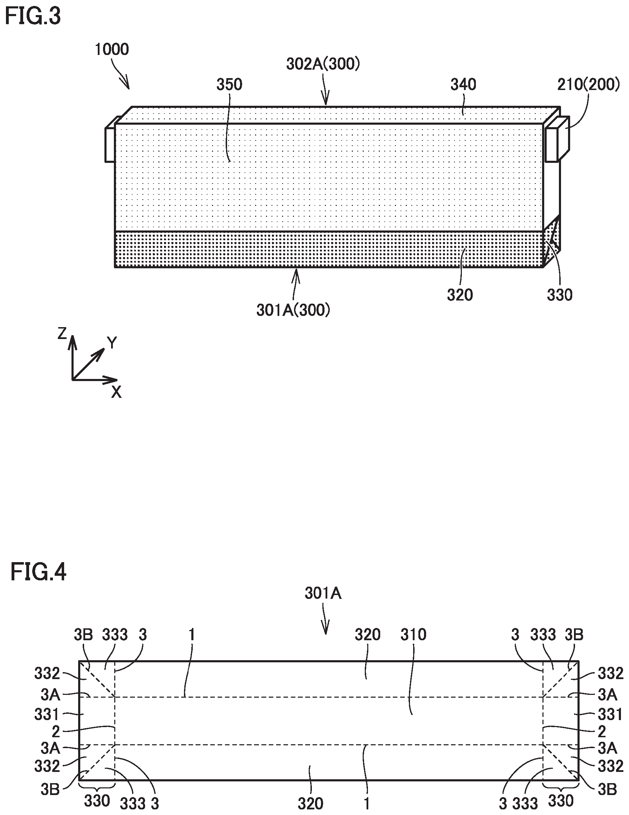

Fig. 3 is a perspective view of a secondary battery 1000 according to a first embodiment. As shown in Fig. 3, an insulating film 300 is provided on the outer surface of exterior container 100. Insulating film 300 insulates secondary batteries 1000 arranged in the Y direction from each other or insulates secondary battery 1000 from another member (for example, a case of a battery pack or the like). Further, by providing insulating film 300, moisture can be suppressed from being adhered to exterior container 100.

Insulating film 300 can be composed of a resin, for example. More specifically, the material of insulating film 300 is, for example, polypropylene (PP), polyethylene terephthalate (PET), polyphenylene sulfide (PPS), polyimide (PI), or polyolefin (PO). Insulating film 300 may be formed by stacking a plurality of films composed of different materials.

The thickness of insulating film 300 is, for example, 70 µm or more and 80 µm or less. It should be noted that insulating film 300 may have such a configuration that an adhesive agent layer is stacked on a substrate layer in order to cover exterior container 100.

Insulating film 300 may be constituted of a plurality of sheets of film. In the example of Fig. 3, insulating film 300 includes a first member 301A and a second member 302A.

Fig. 4 is a development view of first member 301A. As shown in Fig. 4, first member 301A includes a first portion 310, second portions 320, and third portions 330.

First portion 310 covers a whole of first surface 110. Second portions 320 cover portions of third surface 130 and fourth surface 140. Third portions 330 cover portions of fifth surface 150 and sixth surface 160. Third portions 330 are formed to expose electrode terminals 200. Third portions 330 are provided downward (on the first surface 110 side of exterior container 100) with respect to electrode terminals 200. Electrode terminals 200 are provided at positions away from first surface 110 with respect to third portions 330 in the Z direction.

Each of first portion 310, second portions 320, and third portions 330 has a substantially rectangular shape. First portion 310 and second portion 320 are continuously connected to each other. First portion 310 and third portion 330 are continuously connected to each other. Second portion 320 and third portion 330 are continuously connected to each other.

A folding line 1 (first folding portion) is formed between first portion 310 and each of second portions 320. A folding line 2 (second folding portion) is formed between first portion 310 and each of third portions 330. A folding line 3 (third folding portion) is formed between each of second portions 320 and each of third portions 330. Each of folding lines 1, 2, and 3 is formed to be a straight line.

As shown in Fig. 3, third portion 330 includes a portion at which portions of insulating film 300 are overlapped with each other on each of fifth surface 150 and sixth surface 160. As shown in Fig. 4, third portion 330 includes a base region 331 and overlapping regions 332, 333.

Base region 331 is connected to first portion 310 via folding line 2. Base region 331 has a substantially rectangular shape. Overlapping region 332 is connected to base region 331 via a folding line 3A. Overlapping region 333 is connected to second portion 320 via a folding line 3.

Each of overlapping regions 332 and overlapping regions 333 has a substantially triangular shape. A region obtained by combining overlapping regions 332, 333 has a substantially rectangular shape in a state before insulating film 300 is folded.

Folding line 3A is formed between base region 331 and overlapping region 332. Folding line 3B is formed between overlapping region 332 and overlapping region 333. Each of folding lines 3A, 3B is formed to be a straight line. An angle formed by folding line 3A and folding line 3B is substantially 45°. An angle formed by folding line 3 and folding line 3B is substantially 45°.

Overlapping regions 332, 333 are overlapped with each other on each of fifth surface 150 and sixth surface 160 when insulating film 300 is folded and assembled to exterior container 100.

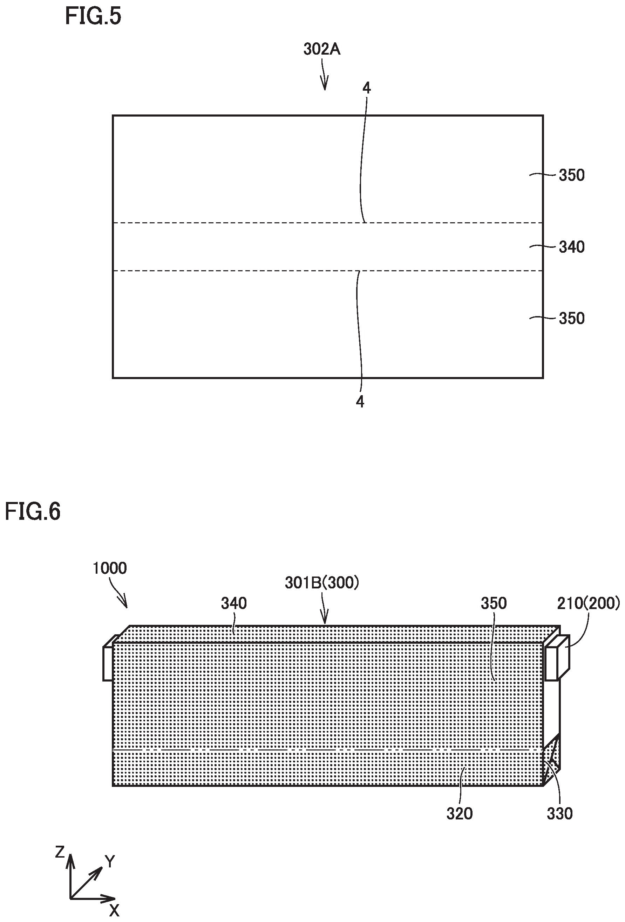

Fig. 5 is a development view of second member 302A. Second member 302A is provided to be separated from first member 301A. Second member 302A includes a fourth portion 340 and fifth portions 350.

Fourth portion 340 covers a whole of second surface 120. Fifth portions 350 cover portions of third surface 130 and fourth surface 140. Each of fifth portions 350 of second member 302A is provided to reach first member 301A when insulating film 300 is assembled to exterior container 100. Therefore, first member 301A and second member 302A are continuous on third surface 130 and fourth surface 140 of exterior container 100, and the whole of each of third surface 130 and fourth surface 140 is covered with second portion 320 (first member 301A) and fifth portion 350 (second member 302A).

However, first member 301A and second member 302A arranged in the Z direction may be provided to be overlapped with each other. When the two layers of insulating film 300 are overlapped with each other, in the case where insulating film 300 located on the upper side is disposed on the outer side at the time of placing secondary battery 1000 (at the time of placing it on a vehicle), moisture can be suppressed from entering from the upper side. On the other hand, when insulating film 300 located on the lower side is disposed on the outer side at the time of placing secondary battery 1000 (at the time of placing it on a vehicle), it is possible to suppress moisture from being raised due to a capillary phenomenon in a clearance between the two layers of insulating film 300.

First member 301A and second member 302A may be composed of the same material or different materials.

Each of fourth portion 340 and fifth portions 350 has a substantially rectangular shape. Fourth portion 340 and fifth portions 350 are continuously connected to one another. A folding line 4 is formed between fourth portion 340 and each of fifth portions 350. Folding line 4 is formed to be a straight line.

In secondary battery 1000 according to the present embodiment, since first portion 310 of insulating film 300 is provided to cover the whole of first surface 110 of exterior container 100, secondary battery 1000 can be securely insulated from other configurations such as the case of the battery pack on the first surface 110 side. Moreover, when first portion 310 covering first surface 110 of exterior container 100 and second portions 320 and third portions 330 covering the four side surfaces (third surface 130 to sixth surface 160) adjacent to first surface 110 are continuously formed by one sheet of insulating film 300 (first member 301A), a clearance can be suppressed from being formed in insulating film 300 on the first surface 110 side, thereby further improving the insulating property at the portions. Thus, according to secondary battery 1000 of the present embodiment, it is possible to provide secondary battery 1000 in which insulating film 300 has a simple configuration while improving the insulation property of exterior container 100.

Moreover, since insulating film 300 can be securely along the outer surface of exterior container 100 and can be therefore in close contact therewith by folding insulating film 300 and assembling it to exterior container 100, the insulating property of exterior container 100 can be improved as compared with a case where a film having a tubular shape or pouch shape is thermally contracted to be along exterior container 100.

Moreover, when first portion 310 to sixth portion 360 respectively covering the six surfaces (first surface 110 to sixth surface 160) of exterior container 100 are composed of the two sheets of insulating film 300 (first member 301A and second member 302A), it is possible to reduce the number of sheets of insulating film 300 as compared with a case where six sheets of insulating film 300 are individually provided on the outer surface (six surfaces) of exterior container 100.

In secondary battery 1000 according to the present embodiment, the folded portions (overlapping regions 332, 333) of insulating film 300 are located on each of fifth surface 150 and sixth surface 160, whereas no portions of insulating film 300 are overlapped on third surface 130 and fourth surface 140. Therefore, when a plurality of secondary batteries 1000 are arranged in the Y direction to form a battery assembly, no step portions due to the overlapping of the portions of insulating film 300 are present on third surface 130 and fourth surface 140 (stacked surfaces) on each of which a restraining load in the Y direction acts, with the result that an uneven load caused by the step portions can be suppressed from acting on secondary batteries 1000.

In secondary battery 1000 according to the present embodiment, since each of first member 301A and second member 302A included in insulating film 300 has a substantially rectangular shape, offcuts can be reduced when insulating film 300 is cut out from its base material.

### (Second Embodiment)

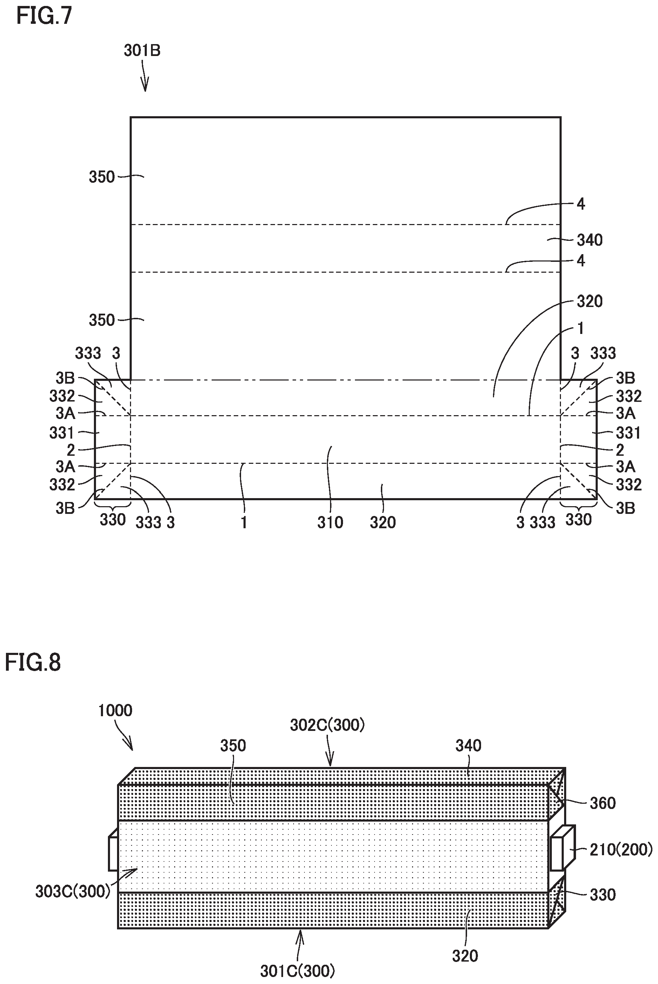

Fig. 6 is a perspective view of a secondary battery 1000 according to a second embodiment. Fig. 7 is a development view of an insulating film 300 of secondary battery 1000 shown in Fig. 6. In the present embodiment, matters similar to those in the first embodiment will not be described in detail repeatedly.

As shown in Figs. 6 and 7, insulating film 300 is constituted of one sheet of film (first member 301B) in secondary battery 1000 according to the second embodiment. First member 301B has a shape obtained by combining first member 301A and second member 302A of the first embodiment. Since insulating film 300 is constituted of one sheet of film, a simpler configuration can be achieved.

### (Third Embodiment)

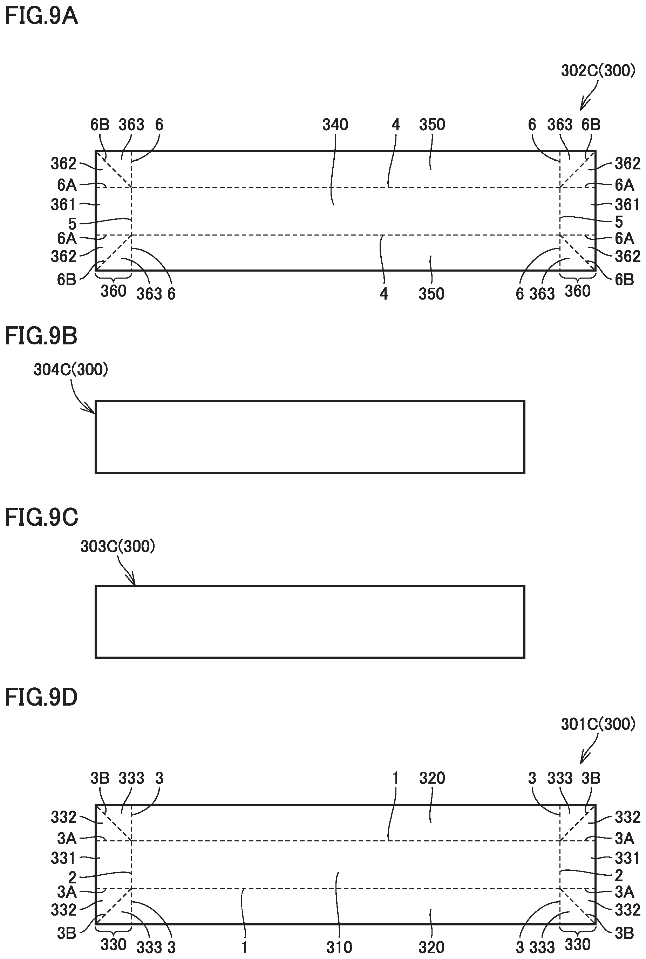

Fig. 8 is a perspective view of a secondary battery 1000 according to a third embodiment. Fig. 9A is a development view of a second member 302C in an insulating film 300 according to the third embodiment. Fig. 9B is a development view of a fourth member 304C in insulating film 300 according to the third embodiment. Fig. 9C is a development view of a third member 303C in insulating film 300 according to the third embodiment. Fig. 9D is a development view of a first member 301C in insulating film 300 according to the third embodiment. In the present embodiment, matters similar to those of the first and second embodiments will not be described in detail repeatedly.

As shown in Figs. 8, 9A, 9B, 9C, and 9D, insulating film 300 includes first member 301C, second member 302C, third member 303C, and fourth member 304C in secondary battery 1000 according to the third embodiment.

First member 301C has the same shape as that of first member 301A of first embodiment. Second member 302C has the same shape as that of first member 301C and is folded in the same manner as first member 301C. The size of second member 302C may be the same as or different from that of first member 301C. Second member 302C is provided on the second surface 120 side of exterior container 100. Third member 303C and fourth member 304C each have a substantially rectangular shape and cover respective central portions of third surface 130 and fourth surface 140 in the Z direction.

Second member 302C is provided to be separated from first member 301C. Second member 302C has a fourth portion 340, fifth portions 350, and sixth portions 360.

Fourth portion 340 covers a whole of second surface 120. Fifth portions 350 cover portions of third surface 130 and fourth surface 140. Sixth portions 360 cover portions of fifth surface 150 and sixth surface 160. The respective portions of fifth surface 150 and sixth surface 160 are covered with third portion 330 and sixth portion 360.

A folding line 4 (fourth folding portion) is formed between fourth portion 340 and each of fifth portions 350. A folding line 5 (fifth folding portion) is formed between fourth portion 340 and each of sixth portions 360. A folding line 6 (sixth folding portion) is formed between each of fifth portions 350 and each of sixth portions 360. Each of folding lines 4, 5, 6 is formed to be a straight line.

As shown in Fig. 8, sixth portion 360 includes a portion at which portions of insulating film 300 are overlapped with each other on each of fifth surface 150 and sixth surface 160.

As shown in Fig. 9A, sixth portion 360 has a base region 361 and overlapping regions 362, 363. A folding line 6A is formed between base region 361 and each overlapping region 362. A folding line 6B is formed between each overlapping region 362 and each overlapping region 363. Each of folding lines 6A, 6B is formed to be a straight line.

Overlapping regions 362, 363 are overlapped with each other on each of fifth surface 150 and sixth surface 160 when insulating film 300 is folded and assembled to exterior container 100.

On third surface 130 of exterior container 100, third member 303C is provided to reach second member 302C from first member 301C. On fourth surface 140 of exterior container 100, fourth member 304C is provided to reach second member 302C from first member 301C. On each of third surface 130 and fourth surface 140, third member 303C and fourth member 304C may be provided to be overlapped with first member 301C or second member 302C, or may be provided not to reach first member 301C or second member 302C.

Also in the present embodiment, as with the first and second embodiments, it is possible to provide secondary battery 1000 in which insulating film 300 has a simple configuration while improving the insulating property of exterior container 100.

### (Configuration of Third Portion 330)

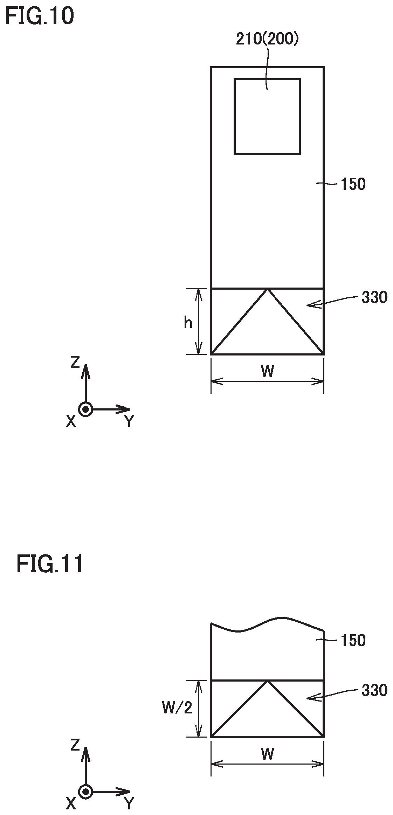

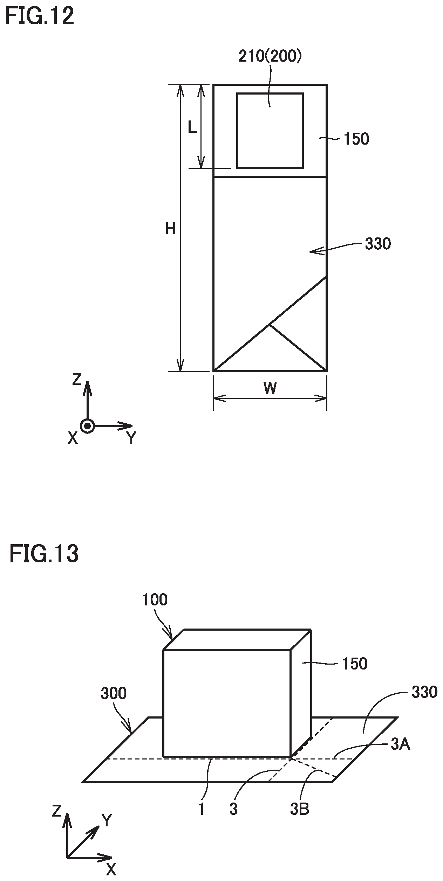

Next, a detailed configuration of third portion 330 of insulating film 300 will be described with reference to Figs. 10 to 13. Here, each of Figs. 10 and 11 shows a structure according to a comparative example, and each of Figs. 12 and 13 shows a structure according to an example of the present technology. It should be noted that Fig. 13 shows a state before insulating film 300 is folded. In order to realize the folded shape of the insulating film of the present application, for example, it is preferable that when exterior container 100 is brought into contact with insulating film 300 as shown in Fig. 13, a valley fold is first made along folding line 3, a valley fold is then made along folding line 1 and a mountain fold is made along folding line 3A at the same time, and then a valley fold is made along folding line 3B.

As shown in Figs. 10 and 11, third portion 330 according to the comparative example has a width W in the second direction (Y direction). Third portion 330 has a height h in the first direction (Z direction). When height h satisfies h<W/2, third portion 330 is not present at the central region in the Z direction on each of fifth surface 150 and sixth surface 160 of exterior container 100, so that the surface of exterior container 100 cannot be covered with insulating film 300. Therefore, a relatively large space lacking in insulation is formed by the region not covered with insulating film 300. In order to reduce the region serving as the space lacking in insulation on each of fifth surface 150 and sixth surface 160 of exterior container 100, h>W/2 is required.

As shown in Fig. 12, third portion 330 according to the example of the present technology has a width W in the Y direction. The maximum height of insulating film 300 at third portion 330 is a height (H-L) obtained by subtracting a distance L between the upper end of exterior container 100 and the lower end of positive electrode terminal 210 (electrode terminal 200) from total height H of exterior container 100. The height of insulating film 300 is preferably higher than, for example, 1/2H. In this way, a large area of exterior container 100 can be covered with insulating film 300 having the simple configuration, thereby improving the insulating property of exterior container 100 on the first surface 110 side. According to each structure illustrated in the present specification, the height of third portion 330 can be freely changed.

### (Fourth Embodiment)

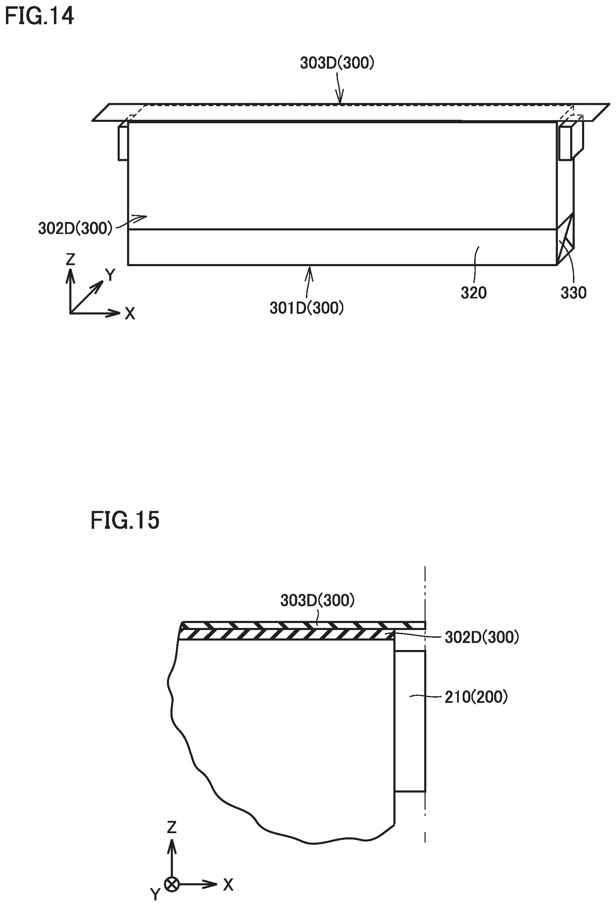

Fig. 14 is a perspective view showing a configuration of a secondary battery 1000 according to a fourth embodiment. In the present embodiment, matters similar to those of the first to third embodiments will not be described in detail repeatedly.

As shown in Fig. 14, in secondary battery 1000 according to the fourth embodiment, insulating film 300 includes a first member 301D, a second member 302D, and a third member 303D.

First member 301D and second member 302D are the same as first member 301A and second member 302A of the first embodiment, respectively. Third member 303D is overlapped with second member 302D from the side opposite to exterior container 100 with respect to second member 302D. Since second member 302D and third member 303D are overlapped with each other, the insulation property of exterior container 100 at second surface 120 is improved.

Fig. 15 is a cross sectional view of surroundings of third member 303D. As shown in Fig. 15, third member 303D is provided to protrude outward with respect to each of fifth surface 150 and sixth surface 160 in the X direction. In the example of Fig. 15, third member 303D is provided to reach the edge end of electrode terminal 200 in the X direction. The end portion of third member 303D and the edge end of electrode terminal 200 protrude with respect to fifth surface 150 or sixth surface 160 to have the same height in the X direction.

In secondary battery 1000 according to the present embodiment, since third member 303D is provided to protrude outward with respect to each of fifth surface 150 and sixth surface 160 in the X direction, a creepage distance can be secured when a substrate member or the like is disposed above third member 303D, thereby forming secondary battery 1000 having a secure insulating property.

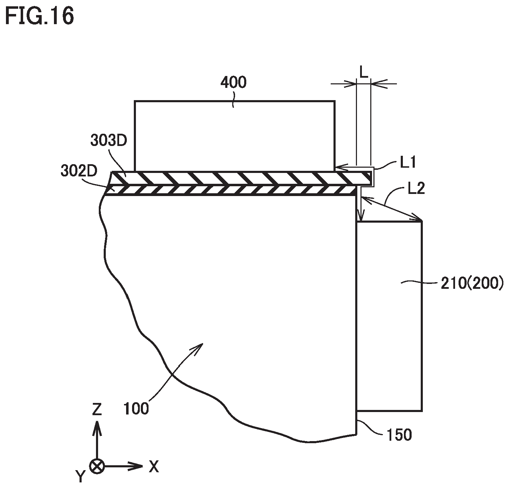

Fig. 16 is a diagram for illustrating an insulation distance between electrode terminal 200 and a conductive component 400.

As shown in Fig. 16, in secondary battery 1000, conductive component 400 is provided on second surface 120. Conductive component 400 is, for example, a harness, a bus bar, a conductive part of a connector, a housing of a battery system, or a conductive portion that may be supplied with power in the event of an insulation failure.

Conductive component 400 is provided on third member 303D. Conductive component 400 is disposed in the vicinity of fifth surface 150 (position close to fifth surface 150 with respect to sixth surface 160) in the X direction. Another conductive component may be disposed in the vicinity of sixth surface 160.

Electrode terminal 200 is provided on fifth surface 150. Third member 303D protrudes outward with respect to fifth surface 150 by a length L (first length) in the X direction.

Since third member 303D protrudes in the X direction, it is possible to increase a creepage distance (L1) and a clearance distance from conductive component 400 to electrode terminal 200. The protruding length (L) of third member 303D is set such that the creepage distance (L1) and the clearance distance from conductive component 400 to electrode terminal 200 are each equal to or more than the insulation distance required for each of conductive component 400 and electrode terminal 200. The insulation distance required for each of the conductive component and the electrode terminal is determined based on the description of JIS C 60664-1:2023 "Insulation coordination for equipment within low-voltage systems- Part 1: Principles, requirements and tests". When conductive component 400 and electrode terminal 200 are disposed as shown in Fig. 16, arc discharge may occur between conductive component 400 and electrode terminal 200. When such arc discharge occurs, secondary battery 1000 is deteriorated, which is not preferable. When third member 303D has a shape to protrude by the protruding length (L) as shown in Fig. 16, the creepage distance (L1) can be made large, thereby reducing the possibility that arc discharge occurs between conductive component 400 and electrode terminal 200.

The protruding length (L) of third member 303D is preferably smaller than a distance (L2) from the corner portion of exterior container 100 to the edge end of electrode terminal 200. In this way, even when third member 303D is deflected due to gravity, the tip of third member 303D does not reach electrode terminal 200, thereby suppressing an unintended influence of third member 303D over electrode terminal 200. The unintended influence means that, for example, when electrode terminals 200 provided in the plurality of secondary batteries 1000 are fastened to each other by a bus bar (not shown), third member 303D is sandwiched between electrode terminal 200 and the bus bar.

In secondary battery 1000 according to the present embodiment, since third member 303D is provided to protrude outward with respect to each of fifth surface 150 and sixth surface 160 in the X direction, a required insulation distance can be secured when conductive component 400 is disposed above third member 303D, thereby forming secondary battery 1000 having a more secure insulating property.

Although the embodiments of the present invention have been described and illustrated in detail, it is clearly understood that the same is by way of illustration and example only and is not to be taken by way of limitation. The scope of the present invention is defined by the terms of the claims, and is intended to include any modifications within the scope and meaning equivalent to the terms of the claims.

## Claims

1. A power storage cell comprising:
an exterior container (100) having an outer surface;
an insulating film (300) provided on the outer surface of the exterior container (100); and
an electrode terminal (200) provided on the outer surface of the exterior container (100), wherein
the outer surface of the exterior container (100) has a first surface (110), a second surface (120), a third surface (130), a fourth surface (140), a fifth surface (150), and a sixth surface (160), the first surface (110) and the second surface (120) being each substantially orthogonal to a first direction, the first surface (110) and the second surface (120) facing each other, the third surface (130) and the fourth surface (140) being each substantially orthogonal to a second direction substantially orthogonal to the first direction, the third surface (130) and the fourth surface (140) facing each other, the fifth surface (150) and the sixth surface (160) being each substantially orthogonal to a third direction substantially orthogonal to the first direction and the second direction, the fifth surface (150) and the sixth surface (160) facing each other,
each of the first surface (110), the second surface (120), the third surface (130), the fourth surface (140), the fifth surface (150), and the sixth surface (160) has a substantially rectangular shape,
the electrode terminal (200) is provided on at least one of the fifth surface (150) and the sixth surface (160),
each of the first surface (110) and the second surface (120) has a first area, each of the third surface (130) and the fourth surface (140) has a second area, and each of the fifth surface (150) and the sixth surface (160) has a third area,
the first area is smaller than the second area and is larger than the third area,
the insulating film (300) has a first member (301A) including a first portion (310) covering a whole of the first surface (110), a second portion (320) covering a portion of each of the third surface (130) and the fourth surface (140), and a third portion (330) covering a portion of each of the fifth surface (150) and the sixth surface (160),
a first folding portion (1) is formed between the first portion (310) and the second portion (320), a second folding portion (2) is formed between the first portion (310) and the third portion (330), and a third folding portion (3) is formed between the second portion (320) and the third portion (330), and
the third portion (330) includes a portion at which portions of the insulating film (300) are overlapped with each other on each of the fifth surface (150) and the sixth surface (160).

2. The power storage cell according to claim 1, wherein
the insulating film (300) has a second member (302A) including a fourth portion (340) covering a whole of the second surface (120) and a fifth portion (350) covering a portion of each of the third surface (130) and the fourth surface (140), the second member (302A) being provided to be separated from the first member (301A), and
the fifth portion (350) of the second member (302A) is provided to reach the first member (301A).

3. The power storage cell according to claim 1, wherein
the first member (301A) of the insulating film (300) further includes a fourth portion (340) covering a whole of the second surface (120), and a fifth portion (350) covering a portion of each of the third surface (130) and the fourth surface (140), and
the fifth portion (350) is provided adjacent to the second portion (320).

4. The power storage cell according to claim 1, wherein
the insulating film (300) has a second member (302C) including a fourth portion (340) covering a whole of the second surface (120), a fifth portion (350) covering a portion of each of the third surface (130) and the fourth surface (140), and a sixth portion (360) covering a portion of each of the fifth surface (150) and the sixth surface (160), the second member (302C) being provided to be separated from the first member (301C),
a fourth folding portion (4) is formed between the fourth portion (340) and the fifth portion (350), a fifth folding portion (5) is formed between the fourth portion (340) and the sixth portion (360), and a sixth folding portion (6) is formed between the fifth portion (350) and the sixth portion (360), and
the sixth portion (360) includes a portion at which portions of the insulating film (300) are overlapped with each other on each of the fifth surface (150) and the sixth surface (160).

5. The power storage cell according to claim 4, wherein
the insulating film (300) has a third member (303C) and a fourth member (304C), the third member (303C) being provided on the third surface (130) between the second portion (320) and the fifth portion (350), the third member (303C) being provided to be separated from the first member (301C) and the second member (302C), the fourth member (304C) being provided on the fourth surface (140) between the second portion (320) and the fifth portion (350), the fourth member (304C) being provided to be separated from the first member (301C), the second member (302C), and the third member (303C), and
the third member (303C) and the fourth member (304C) are provided to reach the second member (302C) from the first member (301C).

6. The power storage cell according to claim 1, wherein
the insulating film (300) has a second member (302D) and a third member (303D), the second member (302D) including a fourth portion (340) covering a whole of the second surface (120), the second member (302D) being provided to be separated from the first member (301D), the third member (303D) being overlapped with the second member (302D) from a side opposite to the exterior container (100) with respect to the second member (302D), and
the third member (303D) is provided to protrude outward with respect to each of the fifth surface (150) and the sixth surface (160) in the third direction.

7. The power storage cell according to claim 6, wherein the third member (303D) is provided to reach an edge end of the electrode terminal (200) in the third direction.

8. The power storage cell according to any one of claims 1 to 7, wherein the third portion (330) is formed to expose the electrode terminal (200).

9. The power storage cell according to any one of claims 1 to 8, wherein the electrode terminal (200) is provided at a position away from the first surface (110) with respect to the third portion (330) in the first direction.
